**Europäisches Patentamt**

(19) **European Patent Office**

**Office européen des brevets**

(11) **EP 0 577 880 B1**

(12) ## EUROPEAN PATENT SPECIFICATION

(45) Date of publication and mention
of the grant of the patent:
**27.12.1996 Bulletin 1996/52**

(51) Int. Cl.⁶: **B31B 1/86**, G01B 5/06

(21) Application number: **92118699.5**

(22) Date of filing: **30.10.1992**

(54) **Abnormality detecting apparatus for bags with handle**

Vorrichtung zur Feststellung von Fehlern bei Tragetaschen mit Handgriff

Dispositif pour détecter des défauts pour des sacs avec poignée

(84) Designated Contracting States:
**DE ES FR IT**

(30) Priority: **05.06.1992 JP 44745/92**

(43) Date of publication of application:
**12.01.1994 Bulletin 1994/02**

(73) Proprietor: **NEWLONG MACHINE WORKS, LTD.**
**Taito-ku, Tokyo (JP)**

(72) Inventor: **Kita, Soutaro**
**Ohmiya-shi Saitama (JP)**

(74) Representative: **Prato, Roberto et al**
**STUDIO TORTA Società Semplice**
**Via Viotti 9**
**10121 Torino (IT)**

(56) References cited:
**EP-A- 0 344 363**      **US-A- 3 706 625**
**US-A- 4 281 828**      **US-A- 4 879 513**

## Description

### BACKGROUND OF THE INVENTION

The present invention relates to an abnormality detecting apparatus for bags with handle, for detecting abnormalities such as falling, coming off at one side, poor positioning and the like.

A conventionally known method for detecting lack or fall of handles during manufacturing process of bags with handle is one for detecting lack of handles in an automatic bag-with-handle manufacturing machine, in which an optical detecting unit is provided for detecting fall of paper patch for the handle string attached to inside of a tubular body at a predetermined time and at a point between a tubular-body forming process and a cutting process so that lack of the paper patch is detected by a signal from the detecting unit. This detecting method has been proposed in Japanese Patent Laid-Open No. 57-95444.

However, the above-described detecting method is designed to detect a difference in thickness of the tubular body due to attached paper patch by the deviation of transmitting photoelectric current. Thus, the detecting accuracy will be affected depending on the thickness of the paper material and whether or not the paper material has any print thereon, since the transmittivity of the light varies depending on such factors. Besides, the difference in thickness is detected merely depending on the presence or absence of the paper patch, so that, with this method, it is impossible to detect abnormalities of such nature as slant mounting of the handles, coming-off of one side and the like.

It is also known from the document US-A-4 879 513 a device of the kind defined by the entering clause of claim 1 for measuring the thickness of a paper lying on a stationary support, by engaging the sheet at only one location. The device is provided with a pull guide arranged above the paper and including a pivot rigidly mounted thereon, the pivot bearing with a lever formed of two arms. A pull roller is located at an end of one arm of the lever and is engageable at said location with the surface of a sheet of the paper arriving on the support. The pull guide also comprises distance measuring means located at the end of the other arm of the lever for measuring a movement executed by the lever to issue a signal in proportion with the magnitude of the distance traversed by said movement, and means connected to said distance measuring means for electronically evaluating said signal.

### SUMMARY OF THE INVENTION

An object of the present invention is to provide an abnormality detecting apparatus for bags with handle. which is surely capable of detecting abnormalities in mounting handles, not only the mere absence of handle but also other various abnormalities such as slant mounting, coming-off at one side and absence of paper patch, regardless of the quality of paper used for the bag and presence or absence of print on the paper.

In order to achieve the above-described object, according to the invention there is provided an abnormality detecting apparatus for bags with handle as defined in claim 1, comprising a bag transfer unit for transferring the bags with handle in one direction, a thickness measuring sensor for outputting a measured value of the thickness being converted into an electrical signal, a detecting controller in communication with said sensor for comparing the measured value with a set value to output a control signal when the measuring value is out of a permissible range, and an abnormality-warning output unit in communication with the detecting controller and conditionable by said control signal to output an abnormality warning signal to the outside, said measuring sensor including a detecting roller biased towards the transfer unit to contact the bag being transferred, and an access detector for measuring the amount of movement of the detecting roller and outputting said measured value to the detecting controller, characterised in that the transfer unit includes a conveyor and an idle roller arranged below the detecting roller across the conveyor, the access detector directly detecting the amount of movement of said detecting roller corresponding to the thickness of the handle portion of each bag (2) being transferred, a timing cam rotating synchronously with the movement of said conveyor, and a proximity switch facing a rotating track of the timing cam for outputting a timing signal to the detecting controller as a reference of the mounting position of the handle on the bag being transferred, whereby the detecting controller outputs also said control signal when a time difference occurs between said timing signal and said output measured value.

Particularly, the sensor comprises an idle roller arranged across the bag transfer unit, a detecting roller disposed opposite to the idle roller with the bag transfer unit disposed therebetween, the detecting roller biased toward the idle roller, and an access detector for measuring a quantity of movement of the detecting roller. When the access detector converts a measured value to an electric signal to output the same to the detecting controller, the detecting controller compares the measured value with a set value. When the measured value is out of an allowable or permissible range, a signal is sent to an abnormality-warning output unit, whereas abnormality-warning output unit outputs an abnormality warning signal to the outside.

According to a preferred embodiment or aspect, a value representing the thicknesses of two handles added is set beforehand assuming the case where two handles are stacked in the detecting controller. According to the invention when bags are transferred by the bag transfer unit, and the handle portions of the respective bags reach the position of the sensor, the detecting roller is separated from the idle roller by the thickness of each of the handle portions; the access detector measures a variation of this quantity, converts the measured value to the electric signal and transfers it to the detecting controller; and the detecting controller compares the received measured value with the set value.

The thickness of the handle portion is measured to be (zero) when the handles are absent. When two handles are not stacked on each other at a normal position due to one-side coming-off and slant mounting, the thickness of the handle portion is measured as being the thickness of a single handle. In the presence of such mounting abnormality, the measured value is out of the permissible range. Accordingly, the detecting controller sends the control signal to the abnormality-warning output unit. Upon receipt of such signal, the warning output unit outputs the abnormality warning signal.

The above and other objects, features and advantages of the present invention will become apparent from the following descriptions with reference to the accompanying drawings.

BRIEF DESCRIPTION OF THE DRAWINGS

Fig. 1 is a front elevational view of a principal portion of an abnormality detecting apparatus for bags with handle according to an embodiment of the invention;

Fig. 2 is a top plan view of the principal portion of the abnormality detecting apparatus for the bags with handle according to the embodiment of the invention;

Fig. 3 is a front elevational view of a timing cam according to the embodiment of the invention; and

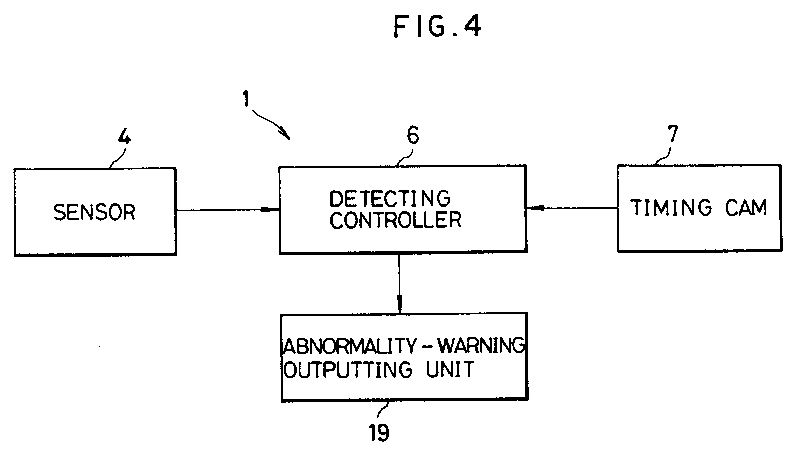

Fig. 4 is a block diagram showing a relationship between various units of the abnormality detecting apparatus for the bags with handle.

DETAILED DESCRIPTION OF THE PREFERRED EMBODIMENT OF THE INVENTION

An embodiment of the present invention will be described in detail with reference to the accompanying drawings.

An abnormality detecting apparatus 1 for bags with handle according to an embodiment of the invention comprises a bag transfer unit 3 such as a belt conveyor or the like for transferring bags 2 with handle in one direction, a pair of left- and right-hand sensors 4 provided on the transfer route of the bag transfer unit 3, a detecting controller 6 in communication with the sensors 4, a timing cam 7 in communication with the detecting controller 6 for generating a timing signal to serve as a reference of a handle mounting position, and an abnormality-warning output unit 19 in communication with the detecting controller 6 for outputting an abnormality warning signal such as buzzer sound, turning-on and - off of a lamp or the like.

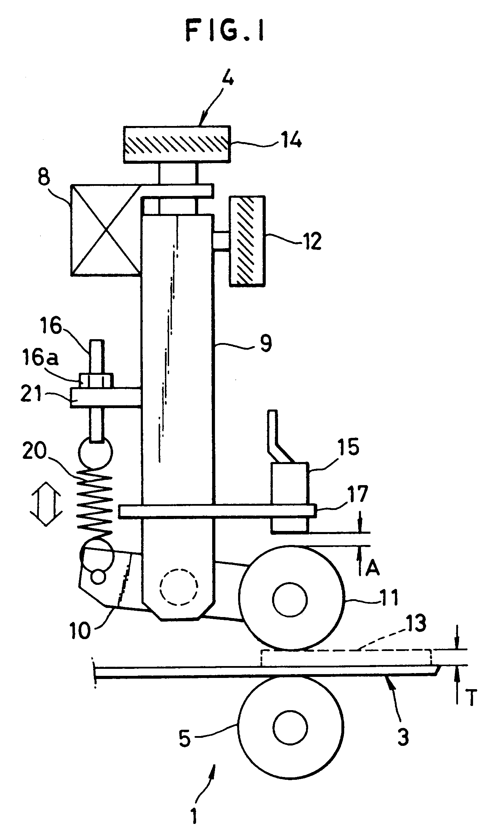

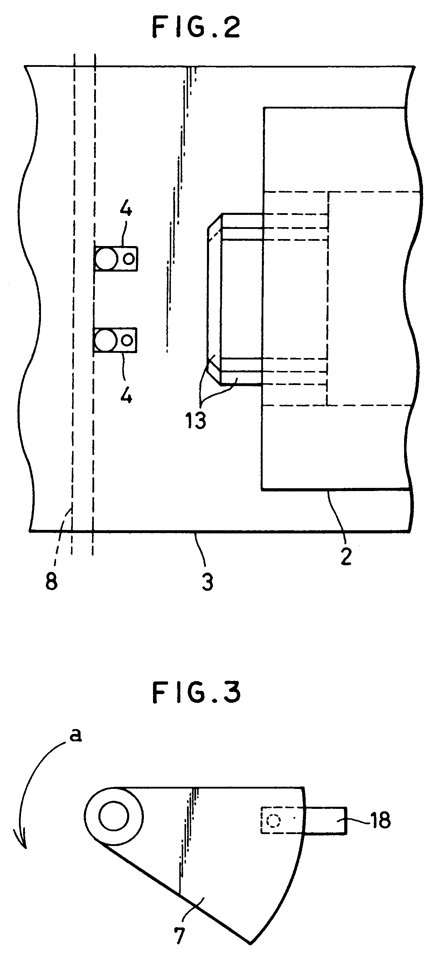

As shown in Fig. 2, the sensors 4 are arranged slightly apart from a central axis of the bag transfer unit 3 and slightly inward from outer edges of a handle 13 of the bag 2 with handle. As shown in Fig. 1, a sensor drum 9 is installed on a mounting arm 8 disposed horizontally across the bag transfer unit 3 so that the height of the drum can be adjusted by a height adjusting screw 14. The sensor drum 9 is installed so as to be fixed in position by a fixing screw 12. A support arm 10 extending along the bag transfer direction is rotatably installed at a lower end of the sensor drum 9. The support arm 10 has one end on which a detecting roller 11 is mounted. An idle roller 5 is arranged below the detecting roller 11 across the bag transfer unit 3.

A tension coil spring 20 is mounted on the other end of the support arm 10. A roller urging-pressure adjusting screw 16 is inserted into an arm 21 which is provided extending from the sensor drum 9. The roller urging-pressure adjusting screw 16 has a lower end connected to an upper end of the tension coil spring 20. The other end of the support arm 10 is pulled upwardly. The detecting roller 11 is biased toward the idle roller 5 through the bag transfer unit 3.

Further, an extension arm 17 is fixedly mounted near the lower end of the sensor drum 9. An access detector 15 is mounted on the forward end of the extension arm 17, which is located just above the detecting roller 11. The access detector 15 intermittently measures the distance between the access detector 15 and the detecting roller 11 each time the handle 13 on the bag transfer unit 3 comes into contact with the detecting roller 11 as it passes the roller. The measured distance is converted to an electric signal and outputted to the detecting controller 6.

More specifically, assuming that the distance between the access detector 15 and the detecting roller 11 to be A1 when the thickness of an article to be detected is zero, the relationship between the distance A between the access detector 15 and the detecting roller 11 and thickness T of the article to be detected can substantially be expressed as $A = A1 - T$. Thus, the variation of thickness of the handle portion can be obtained by measuring the distance between the access detector 15 and the detecting roller 11.

When the sensors 4 are located excessively near the central portion of the handle 13, accuracy in detecting slant mounting of the handle 13 will fall. Whereas, when the sensors 4 are located excessively near outside of the handle 13, detecting errors occur due to the influence of the thickness of folded-back portion of the the handle 13. Thus, the mounting position of the sensor 4 in a direction crossing transfer direction of the bag 2 with handle can be adjusted depending on the size of the bag 2 with handle. The roller urging-pressure adjusting screw 16 is adjusted depending on the thickness of the handle 13 to change an urging force of the detecting roller 11, and the height adjusting screw 14 is adjusted to change the height of the detecting roller 11.

The timing cam 7 is a device for deciding the time at which the controller 6 accepts the signals of the sensors 4, for comparison with a set value, in order to indicate whether the mounting position of the handle 13 is normal or not depending on the mounting position of the handle 13 with respect to the bag. As shown in Fig. 3, while the abnormality detecting apparatus 1 for the bags with handle is in operation, the timing cam 7 is rotated in a direction indicated by an arrow a synchronously with the bag transfer unit 3. When the timing cam 7 comes near a proximity switch 18 provided on a rotary track of the timing cam 7, a signal is generated from the proximity switch 18 to the detecting controller 6. When the timing cam 7 has passed the proximity switch 18, the signal is stopped. The rotary center of the timing cam 7 is set so that the rotary center is distance-adjustably allowed either to approach or away from the proximity switch 18 depending on the mounting position of the handle 13, before the handle 13 of the bag 2 with handle comes under the detecting rollers 11 of the sensors 4, whereby the output time can be adjusted by changing the width of cam 7 passing the proximity switch 18.

At this time, if output of the signal due to the timing cam 7 is outputted too immediately before contact of the handle 13 to the detecting roller 11, a detecting error occurs because of the disagreement between the upper and lower handles 13, whereas if output is too early, it makes the detection of the positional deviation of the handles 13 impossible. Besides, where only lack of the handle 13 is to be detected, the cam width is increased to take a longer period of time for cam operation so as not to detect the positional disagreement.

The abnormality-warning output unit 19 such as a buzzer, a lump or the like is connected to the detecting controller 6. A value corresponding to a change in thickness resulting from the normal mounting of two handles 13 is set beforehand. Signals received respectively from the two sensors 4 and 4 and a set value are compared with each other. When the signals from the respective sensors 4 exceed the permissible range, a signal is sent to the abnormality-warning output unit 19 to output an abnormality warning signal to the outside.

Moreover, if the signals from the respective sensors 4 are not inputted during the time through which a signal from the proximity switch 18 is received, the abnormality detecting apparatus judges that the abnormalities such as lack of the handles or the like are existing to output the abnormality warning signal. Even if there are the inputs from the respective sensors 4 before or after the signal from the proximity switch 18 is received, the abnormality detecting apparatus judges that the abnormalities such as one-side coming-off, slant mounting or the like are existing, and the abnormality warning signal is outputted.

**Claims**

1.  An abnormality detecting apparatus for bags with handle, comprising a bag transfer unit (3) for transferring the bags (2) with handle (13) in one direction, a thickness measuring sensor (4) for outputting a measured value of the thickness being converted into an electrical signal, a detecting controller (6) in communication with said sensor (4) for comparing the measured value with a set value to output a control signal when the measuring value is out of a permissible range, and an abnormality-warning output unit (19) in communication with the detecting controller (6) and conditionable by said control signal to output an abnormality warning signal to the outside, said measuring sensor (4) including a detecting roller (11) biased towards the transfer unit (3) to contact the bag (2) being transferred, and an access detector (15) for measuring the amount of movement of the detecting roller (11) and outputting said measured value to the detecting controller (6), characterised in that the transfer unit includes a conveyor (3) and an idle roller (5) arranged below the detecting roller (11) across the conveyor (3), the access detector (15) directly detecting the amount of movement of said detecting roller (11) corresponding to the thickness of the handle portion of each bag (2) being transferred, a timing cam (7) rotating synchronously with the movement of said conveyor (3), and a proximity switch (18) facing a rotating track of the timing cam (7) for outputting a timing signal to the detecting controller (6) as a reference of the mounting position of the handle (13) on the bag (2) being transferred, whereby the detecting controller (6) outputs also said control signal when a time difference occurs between said timing signal and said output measured value.

2.  An abnormality detecting apparatus for bags with handle according to claim 1, characterised in that a pair of left-hand and right-hand measuring sensors (4) are provided transversely to the bag transfer direction slightly apart from a central axis of the bag (2) and inward from outer edges of the handle (13), the mounting position of the detecting rollers (11) of said sensors (4) in a direction perpendicular to said bag transfer direction being adjustable.

3.  An abnormality detecting apparatus for bags with handle according to claim 1 or 2, wherein a distance between a rotational center of said timing cam (7) and said proximity switch (18) is changeable, and a width of said timing cam (7) passing said proximity switch (18) is also changeable.

4.  An abnormality detecting apparatus for bags with handle according to any previous claim, wherein said sensor (4) is arranged so that a sensor drum (9) is installed on a mounting arm (8) arranged horizontally above said bag transfer unit (3) so that its height of said sensor drum 9 can be adjusted by a height adjusting screw (14); a support arm (10) extending along the bag transfer direction is rotatably arranged at a lower end of said sensor drum (9); and the detecting roller (11) is mounted on one end of said support arm (10).

5. An abnormality detecting apparatus for bags with handle according to claim 4, wherein a tension spring (20) is mounted between a lower end of a roller urging-pressure adjusting screw (16) and the other end of said support arm (10); said roller urging-pressure adjusting screw (16) is inserted into an arm (21) installed on said sensor drum (9); and a nut (16a) is threadedly engaged with said roller urging-pressure adjusting screw (16).

**Patentansprüche**

1. Ein Abnormalitätenüberwachungsapparat für Taschen mit Griff, enthaltend eine Taschentransporteinheit (3) zum Transport der Taschen (2) mit Griff (13) in eine Richtung, einen Dickenmeßsensor (4) zur Ausgabe eines Meßwertes der Dicke, der in ein elektrisches Signal konvertiert wird, einen Ermittlungskontroller (6) kommunizierend mit dem Sensor (4) zum Vergleich des Meßwertes mit einem vorgegebenen Wert zur Ausgabe eines Steuersignals, wenn der Meßwert außerhalb eines zugelassenen Bereichs liegt und eine Abnormalitätenwarn-Ausgabeeinheit (19) kommunizierend mit dem Ermittlungskontroller (6) und beeinflußbar durch besagtes Steuersignal zur Ausgabe eines Abnormalitätenwarnsignals nach außen, wobei der Meßsensor (4) eine Ermittlungsrolle (11) beinhaltet, die schräg gegen die Transporteinheit gerichtet ist um die transportierte Tasche (2) zu kontaktieren und mit einem Annäherungsdetektor (15) zur Messung der Größe der Geschwindigkeit der Ermittlungsrolle (11) und zur Ausgabe eines Meßwertes an den Ermittlungskontroller (6), **dadurch gekennzeichnet**, daß die Transporteinrichtung einen Förderer (3) beinhaltet und eine Leerlaufrolle (5), die unterhalb der Ermittlungsrolle (11) quer über dem Förderer (3) angeordnet ist, und daß der Annährungsdetektor (15) unmittelbar die Größe der Bewegung der Ermittlungsrolle (11), in Übereinstimmung mit der Dicke des Griffbereichs jeder Tasche (2) die transportiert wird, überwacht und daß ein zeitgebender Nocken (7) vorgesehen ist, der mit der Bewegung des Förderers (3) synchron rotiert sowie ein Näherungsschalter (18), der der rotierenden Spur des zeitgebenden Nockens (7) gegenüberliegt um ein Zeitsignal an den Ermittlungskontroller (6) auszugeben in Bezug auf die Befestigungsposition des Griffs (13) an der Tasche (2) die transportiert wird, wobei der Überwachungskontroller (6) ebenfalls ein Steuersignal ausgibt, wenn eine Zeitdifferenz zwischen dem Zeitsignal und dem ausgegebenen Meßwert auftritt.

2. Abnormalitätenüberwachungsapparat für Taschen mit Griffen nach Anspruch 1, **dadurch gekennzeichnet**, daß ein Paar von links und rechts angeordneten Meßsensoren (4) transversal zur Taschentransportrichtung vorgesehen ist, die geringfügig von einer Zentralachse der Tasche (2) beabstandet und innerhalb der äußeren Ecken der Griffe (13) vorgesehen sind, wobei die Befestigungsposition der Ermittlungsrolle (11) der besagten Sensoren (4) in einer senkrechten Richtung zur Richtung des Taschentransports einstellbar ist.

3. Abnormalitätenüberwachungsapparat für Taschen mit Griffen nach Anspruch 1 oder 2, bei denen die Entfernung zwischen dem Drehzenter des zeitgebenden Nockens (7) und dem Näherungsschalter (18) veränderbar ist und wobei die Weite des zeitgebenden Nockens (7) der den Näherungsschalter (18) passiert, ebenfalls veränderbar ist.

4. Abnormalitätenüberwachungsapparat für Taschen mit Griffen nach einem der vorangegangenen Ansprüche, wobei der Sensor (4) so angeordnet ist, daß eine Sensortrommel (9) auf einem Befestigungsarm sitzt und horizontal über der Taschentransporteinheit (3) angeordnet ist, so daß die Höhe der Sensortrommel (9) durch eine HöheneinstellHöhe der Sensortrommel (9) durch eine Höheneinstellschraube (14) eingestellt werden kann und wobei ein Tragarm (10) sich längs der Taschentransportrichtung erstreckt und an einem unteren Ende der Sensortrommel rotierend sitzt und wobei die Ermittlungsrolle (11) an einem Ende des Tragarms (10) angebracht ist.

5. Abnormalitätenüberwachungsapparat für Taschen mit Griffen nach Anspruch 4, wobei eine Zugfeder (20) zwischen einem unteren Ende und dem anderen Ende des Tragarms (10) angeordnet ist, wobei eine Rollenanpreßeinstellschraube (16) in einen Arm (21) eingesetzt ist, der auf der Sensortrommel (9) sitzt und wobei eine Mutter (16a) im schraubenden Eingriff mit der Rollenanpreßeinstellschraube (16) ist.

**Revendications**

1. Dispositif de détection de défauts dans des sacs avec poignées, comprenant une unité de transfert de sacs (3) pour transférer les sacs (2) avec poignées (13) dans une direction, un capteur de mesure d'épaisseur (4) pour délivrer une valeur mesurée de l'épaisseur convertie en un signal électrique, un dispositif de commande de détection (6) communiquant avec ledit capteur (4) pour comparer la valeur mesurée avec une valeur de consigne pour délivrer un signal de commande lorsque la valeur de mesure se trouve hors d'une plage autorisée, et une unité d'avertissement de défauts (19) communiquant avec le dispositif de commande de détection (6) et pouvant être conditionnée par ledit signal de commande pour délivrer à l'extérieur un signal d'avertissement de défauts, ledit capteur de mesure (4) comprenant un galet de détection (11) rappelé en direction de l'unité de transfert (3) pour venir en contact avec le sac (2) en cours de transfert, et un détecteur d'accès (15) pour mesurer la quantité de mouvement du galet de détection (11) et pour délivrer ladite valeur mesurée au dispositif de commande de détection (6), caractérisé en ce que l'unité de transfert comprend un convoyeur (3) et un galet fou (5) disposé en dessous du galet de détection (11) de l'autre côté du convoyeur (3), le détecteur d'accès (15) détectant directement la quantité de mouvement dudit galet de détection (11) correspondant à l'épaisseur de la portion de poignées de chaque sac (2) en cours de transfert, une came de synchronisation (7) tournant en synchronisme avec le mouvement dudit convoyeur (3), et un interrupteur de proximité (18) en vis-à-vis du trajet de rotation de la came de synchronisation (7) pour délivrer un signal de synchronisation au dispositif de commande de détection (6) en tant que référence de la position de montage de la poignée (13) sur le sac (2) en cours de transfert, d'où il résulte que le dispositif de commande de détection (6) délivre également ledit signal de commande lorsqu'une différence dans le temps survient entre ledit signal de synchronisation et ladite valeur mesurée délivrée.

2. Dispositif de détection de défauts dans des sacs avec poignées selon la revendication 1, caractérisé en ce qu'il est prévu une paire de capteurs de mesure, gauche et droit, (4), transversalement par rapport à la direction de transfert des sacs légèrement à distance de l'axe central du sac (2) et vers l'intérieur par rapport aux bords extérieurs des poignées (13), la position de montage des galets de détection (11) desdits capteurs (4) dans une direction perpendiculaire à la direction de transfert des sacs étant réglable.

3. Dispositif de détection de défauts dans des sacs avec poignées selon la revendication 1 ou la revendication 2, dans lequel on peut modifier la distance entre un centre de rotation de ladite came de synchronisation (7) et ledit interrupteur de proximité (18), et on peut également modifier la largeur de ladite came de synchronisation (7) qui passe devant ledit interrupteur de proximité (18).

4. Dispositif de détection de défauts dans des sacs avec poignées selon l'une quelconque des revendications précédentes, dans lequel ledit capteur (4) est disposé de telle sorte qu'un tambour capteur (9) est installé sur un bras de montage (8) disposé horizontalement au-dessus de ladite unité de transfert de sacs (3) de façon à pouvoir régler la hauteur dudit tambour capteur (9) à l'aide d'une vis de réglage de hauteur (14), dans lequel un bras support (10) s'étendant dans la direction de transfert des sacs est monté à pivotement sur une extrémité inférieure dudit tambour capteur (9), et dans lequel le galet de détection (11) est monté sur une extrémité dudit bras support (10).

5. Dispositif de détection de défauts dans des sacs avec poignées selon la revendication 4, dans lequel un ressort de traction (20) est monté entre une extrémité inférieure d'une vis (16) de réglage de la pression de rappel du galet et l'autre extrémité dudit bras support (10), dans lequel ladite vis (16) de réglage de la pression de rappel de galet est insérée dans un bras (21) installé sur ledit tambour capteur (9) et dans lequel un écrou (16a) est vissé sur ladite vis (16) de réglage de pression de rappel du galet.

# FIG.1

# FIG.2

# FIG.3

# FIG.4

```
        4                    1        6                    7
   ┌──────────┐        ┌─────────────────┐        ┌──────────────┐
   │  SENSOR  │───────▶│    DETECTING    │◀───────│  TIMING CAM  │
   │          │        │   CONTROLLER    │        │              │
   └──────────┘        └─────────────────┘        └──────────────┘
                               │
                               ▼
                    ┌──────────────────────┐
                    │ ABNORMALITY − WARNING │
                    │   OUTPUTTING UNIT     │
                    └──────────────────────┘
                               19
```

EP 0 577 880 B1